# EUROPEAN PATENT APPLICATION

(11) **EP 4 535 805 A1**
(43) Date of publication of application: **09.04.2025**
(21) Application number: 24202426.3
(22) Date of filing: 25.09.2024
(51) Int. Cl.: H04N 23/50, G08B 13/196, H04N 23/90

(54) **MULTI-CAMERA ASSEMBLY**

(30) Priority: 27.09.2023 KR 20230131016
(71) Applicant: Hanwha Vision Co., Ltd., Seongnam-si, Gyeonggi-do 13488 (KR)
(72) Inventor: Kim, Ji-Seok, 13488 Seongnam-si, Gyeonggi-do, (KR)
(74) Representative: Gulde & Partner

(57) **Abstract**

Disclosed is a multi-camera assembly including a plurality of camera modules; a plurality of frame pans for respectively supporting the camera modules such that each camera moule is tiltable relative to each frame pan; a frame bottom constructed to support the frame pans thereon such that the frame pans are able to revolve around a center axis of the frame bottom in a panning direction of the camera modules; a shaft pan disposed on the frame bottom and constructed to fix inner sides of the frame pans; and an elastic member interposed between each of the frame pans and the frame bottom.

## Description

### BACKGROUND

### Field

The present disclosure relates to a multi-camera assembly, and more specifically, to a multi-camera assembly capable of improving an assembly structure to implement a smooth rotation feeling during a panning process of a camera module, and furthermore, of providing a compact structure.

### Description of Related Art

Generally, a surveillance camera for the purpose of monitoring a specific area has a plurality of camera modules having pan/tilt/zoom movements for the purpose of covering a wide area with a small number of devices and of tracking an object with a specific movement. In particular, among the types of surveillance cameras, a dome camera has a circular symmetrical shape around a central axis, so that the dome camera may easily perform pan/tilt/zoom movements and may be miniaturized. Thus, use frequency thereof is increasing.

This surveillance camera is equipped with the dome cover that is designed to cover a plurality of cameras with a transparent optical outer part, and is configured to prevent fogging or condensation on the dome cover by blowing air to an inner surface of the dome cover using a fan mounted in an inside of the dome cover. Specifically, the conventional dome camera is installed with a plurality of blower fans, a plurality of intake ports, and a plurality of exhaust ports corresponding to and adjacent to the plurality of camera modules disposed in a circumferential direction of a housing.

The blower fans may be used to remove moisture generated by a difference between temperatures of the inside and the outside of the camera device, or may be used to cool the camera module or the circuit board that may be overheated depending on the installation/use environment.

In addition, the dome cover is configured to include a transparent panel that transmits reflected light from a subject therethrough so that the reflected light may enter the camera module, and a light transmissive panel that transmits infrared rays irradiated from the lighting module therethrough. Since the transparent panel and the transmission panel of this dome cover are made of different materials or have different shapes, they are manufactured as separate components and then assembled with each other and the assembly is mounted on the housing.

However, the conventional surveillance camera has limitations in securing a spacing between the camera modules for panning. Further, a product size inevitably increases due to the need for a spatial leeway to implement panning and tilting. Thus, a scheme is needed to meet the need of the demand for miniaturization of the surveillance camera.

Prior art document: Patent document 0001: Korean Patent No. 10-1982751 as registered on May 21, 2019.

### SUMMARY

The present disclosure is intended to solve such problems, and more specifically, a purpose of the present disclosure is to provide a multi-camera assembly that provides a smooth friction feeling during a panning process between camera modules, reduces a size of each of a plurality of camera modules to secure a panning spacing, and improves an interface location to reduce an overall height thereof.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

A first aspect of the present disclosure for achieving the purpose provides a multi-camera assembly comprising: a plurality of camera modules; a plurality of frame pans for respectively supporting the camera modules such that each camera module is tiltable relative to each frame pan; a frame bottom constructed to support the frame pans thereon such that the frame pans are able to revolve around a center axis of the frame bottom in a panning direction of the camera modules; a shaft pan disposed on the frame bottom and constructed to fix inner sides of the frame pans; and an elastic member interposed between each of the frame pans and the frame bottom.

In accordance with some embodiments of the first aspect of the multi-camera assembly, the frame bottom has a stopper formed adjacent to a lighting module disposed outwardly of the frame bottom, wherein the stopper has coupling groove facing inwardly, wherein each frame pan has a protrusion inserted into the coupling groove.

In accordance with some embodiments of the first aspect of the multi-camera assembly, each frame pan includes a fixed portion positioned inwardly of the protrusion, wherein the fixed portion has an elastic member receiving groove defined therein and facing the frame bottom, wherein the elastic member is received in the elastic member receiving groove.

In accordance with some embodiments of the first aspect of the multi-camera assembly, the fixed portion has both opposing fixing grooves respectively defined at both opposing sides arranged along a length direction of the elastic member, wherein the fixing grooves are spaced from each other by a spacing sized such that the elastic member can be deformed elastically when being compressed.

In accordance with some embodiments of the first aspect of the multi-camera assembly, the elastic member includes both opposing inserted portions respectively inserted into the fixing grooves, wherein the elastic member includes a leaf spring extending between both opposing inserted portions in a bent manner therefrom so as to contact the frame bottom.

In accordance with some embodiments of the first aspect of the multi-camera assembly, each elastic member is individually received in the elastic member receiving groove of the fixed portion.

In accordance with some embodiments of the first aspect of the multi-camera assembly, the shaft pan is configured to press an inner side surface of each of the fixed portions outwardly.

In accordance with some embodiments of the first aspect of the multi-camera assembly, the shaft pan includes: an interface constituting a top of the shaft pan and disposed between the camera modules; extensions extending downwardly from the interface and arranged in a circumferential manner; and a pressing portion connecting lower ends of the extensions to each other, wherein the pressing portion presses an upper surface or the inner side surface of the fixed portion.

In accordance with some embodiments of the first aspect of the multi-camera assembly, the shaft pan includes at least one communication hole defined between the extensions extending between the interface and the pressing portion.

In accordance with some embodiments of the first aspect of the multi-camera assembly, each frame pan includes: a first support and a second support configured to respectively support both opposing sides of each camera module so that the camera module pivots in a tilting manner around a tilt axis extending through the first support and the second support; a friction member interposed between the first support and one side of the camera module in a close contact manner with each other; and a through-hole formed in an upper area of the second support such that the other side of the camera module is inserted into the through-hole.

In accordance with some embodiments of the first aspect of the multi-camera assembly, each camera module includes: a frame tilt coupled to each camera module at the first and second supports such that the frame tilt is able to tilt around the tilt axis extending through the first and second supports; a cover rotate rotatably inserted into an inner space defined in the frame tilt; and a cover front coupled onto the cover rotate and constructed to rotate together with rotation of the cover rotate.

In accordance with some embodiments of the first aspect of the multi-camera assembly, the cover rotate has a fastener receiving groove defined in an inner surface of the cover rotate, wherein the fastener receiving groove extends along the rotational direction of the cover rotate, wherein a portion of a fastener having passed through the first support is inserted into the fastener receiving groove.

In accordance with some embodiments of the first aspect of the multi-camera assembly, the frame tilt includes a stopper inserted into the through-hole of the second support, wherein the stopper protrudes outwardly in an aligned manner with the tilt axis of the camera module, wherein the stopper has a protrusion protruding from an outer surface thereof, wherein the through-hole of the second support has a recess outwardly from an inner surface of the through-hole, wherein the recess of the through-hole and the protrusion of the stopper are aligned or non-aligned with each other in the tilt axis.

In accordance with some embodiments of the first aspect of the multi-camera assembly, when the camera module is tilted relative to the frame pan in a tilting angular range, the recess of the through-hole and the protrusion of the stopper partially overlap each other in the tilt axis.

Specific details of other embodiments are included in the detailed description and drawings.

According to the multi-camera assembly according to an embodiment of the present disclosure, following effects may be realized. However, the present disclosure is not limited thereto.

First, a smooth panning revolving feeling may be implemented by individually providing the elastic member corresponding to each camera module so as to be received between the frame pan and the frame bottom.

Second, a uniform rotation (or spinning) feeling of the camera module may be provided by improving the joint structure between the frame tilt and the cover rotate.

Third, a more compact appearance may be achieved by defining the fastener receiving groove in the cover rotate to reduce the overall size of the camera module.

Fourth, the panning angle of the camera module may be further increased while the size of the camera module may be reduced, such that a wider angle of view for surveillance may be secure.

Fifth, the interface is installed at the top of the shaft pan such that a side height of the housing may be reduced.

The effects of the present disclosure are not limited to the effects mentioned above, and other effects not mentioned will be clearly understood by those skilled in the art from the description of the claims.

### BRIEF DESCRIPTION OF DRAWINGS

The detailed description of the preferred embodiments of the present application as described below, as well as the summary as described above will be better understood when being read in conjunction with the attached drawings. The drawings illustrate preferred embodiments for the purpose of illustrating the present disclosure. However, it should be understood that the present application is not limited to the precise arrangements and means as illustrated.
FIG. 1 is a perspective view illustrating a multi-camera assembly according to an embodiment of the present disclosure.
FIG. 2 is an exploded perspective view illustrating the multi-camera assembly as illustrated in FIG. 1.
FIG. 3 is a cross-sectional view illustrating a I-I' cross-section of the multi-camera assembly as illustrated in FIG. 1.
FIG. 4 is an enlarged reference diagram illustrating a portion of the multi-camera assembly as illustrated in FIG. 3.
FIG. 5 is an enlarged partial view showing an elastic member of the multi-camera assembly as illustrated in FIG. 4.
FIG. 6 is a rear view showing components around the elastic member of the multi-camera assembly as illustrated in FIG. 4.
FIG. 7 is a cross-sectional view showing an II-II' cross-section of the multi-camera assembly as illustrated in FIG. 6.
FIG. 8 is a perspective view showing a shaft pan of the multi-camera assembly as illustrated in FIG. 4.
FIG. 9 is a cross-sectional view showing one camera module of the multi-camera assembly as illustrated in FIG. 4.
FIG. 10 is a perspective view showing a combined structure of a frame pan and a frame tilt of the multi-camera assembly as illustrated in FIG. 9.
FIG. 11 is a plan view showing an upper portion of the multi-camera assembly as illustrated in FIG. 1 while the dome cover has been removed therefrom.
FIG. 12 and FIG. 13 are perspective views showing an internal assembly structure of the camera module as illustrated in FIG. 4.

### DETAILED DESCRIPTIONS

Hereinafter, a preferred embodiment of the present disclosure will be described in detail with reference to the attached drawings.

Advantages and features of the present disclosure, and a method of achieving the advantages and features will become apparent with reference to embodiments described later in detail together with the accompanying drawings. However, the present disclosure is not limited to the embodiments as disclosed below, but may be implemented in various different forms. Thus, these embodiments are set forth only to make the present disclosure complete, and to completely inform the scope of the present disclosure to those of ordinary skill in the technical field to which the present disclosure belongs, and the present disclosure is only defined by the scope of the claims.

A shape, a size, a ratio, an angle, a number, etc. disclosed in the drawings for describing the embodiments of the present disclosure are exemplary, and the present disclosure is not limited thereto. The same reference numerals refer to the same elements herein. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list. In interpretation of numerical values, an error or tolerance therein may occur even when there is no explicit description thereof.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

Further, as used herein, when a layer, film, region, plate, or the like may be disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like may be disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

In descriptions of temporal relationships, for example, temporal precedent relationships between two events such as "after", "subsequent to", "before", etc., another event may occur therebetween unless "directly after", "directly subsequent" or "directly before" is not indicated.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

The features of the various embodiments of the present disclosure may be partially or entirely combined with each other, and may be technically associated with each other or operate with each other. The embodiments may be implemented independently of each other and may be implemented together in an association relationship.

In interpreting a numerical value, the value is interpreted as including an error range unless there is no separate explicit description thereof.

It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

The features of the various embodiments of the present disclosure may be partially or entirely combined with each other, and may be technically associated with each other or operate with each other. The embodiments may be implemented independently of each other and may be implemented together in an association relationship.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the embodiment will be described in detail with reference to the attached drawings. However, regardless of the drawing symbols, identical or corresponding components will be given the same reference numbers, and duplicate descriptions thereof will be omitted.

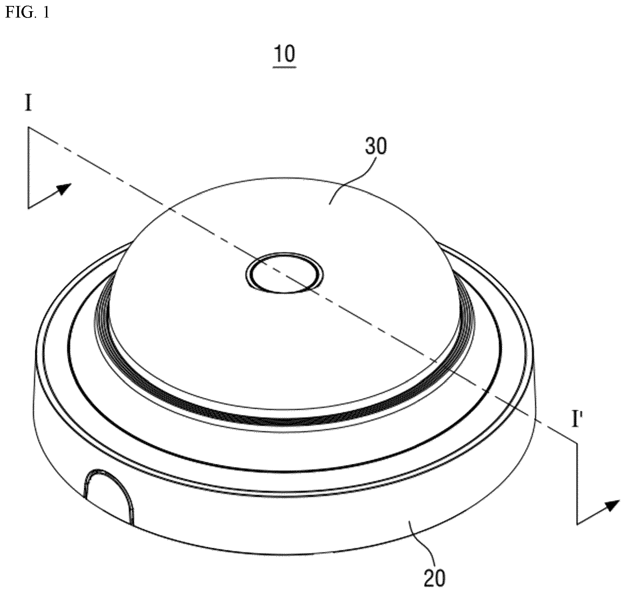

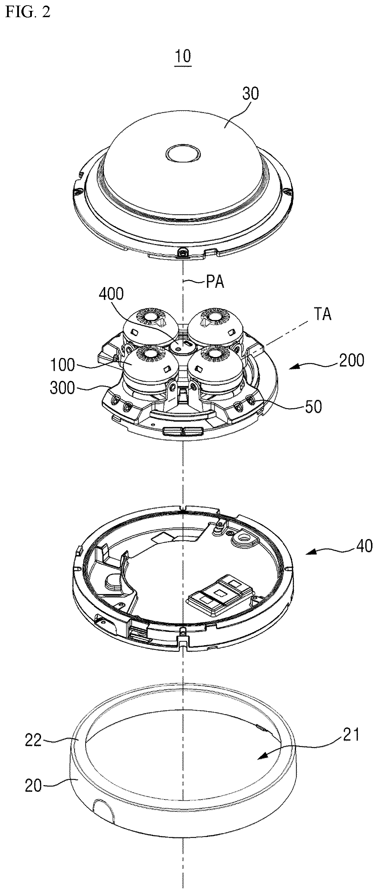

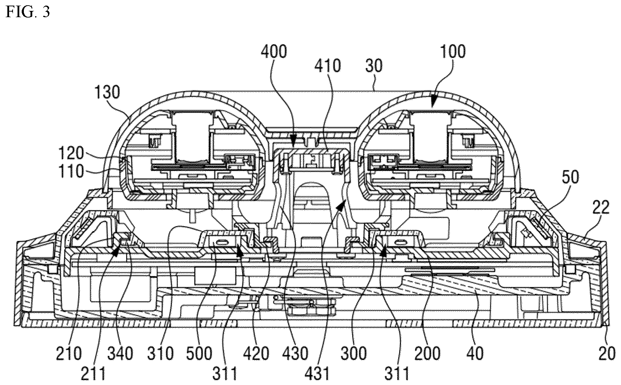

FIG. 1 is a perspective view illustrating a multi-camera assembly according to an embodiment of the present disclosure, FIG. 2 is an exploded perspective view illustrating the multi-camera assembly as illustrated in FIG. 1, and FIG. 3 is a cross-sectional view illustrating a I-I' cross-section of the multi-camera assembly as illustrated in FIG. 1.

Referring to FIGS. 1 to 3, a multi-camera assembly 10 according to an embodiment of the present disclosure may include a housing 20, a plurality of camera modules 100, a dome cover 30, a frame bottom 200, frame pans 300, and a shaft pan 400.

In FIGS. 1 to 3, an example in which the dome cover 30 is located at a top is described. When the multi-camera assembly 10 is installed on an installation surface, the dome cover 30 may face downwardly. Therefore, the concepts of downward and upward directions as described below may be changed to upward and downward directions depending on an installation location.

First, the housing 20 may be disposed to constitute an edge of the multi-camera assembly 10 extending approximately along a circumference of the multi-camera assembly 10. The housing 20 may have a set height and may have a receiving space 21 defined therein. The housing 20 may be bent inwardly while extending along the circumference such that a step 22 is formed at a top of the housing. An outer end of the dome cover 30 and a support frame 40 may be coupled to the step, so that the camera module 100 may be covered with the dome cover 30 and the support frame 40.

The support frame 40 may be received in the receiving space 21 of the housing 20. The support frame 40 may be equipped with a circuit board, etc. mounted thereon. The frame bottom 200 may be fixedly disposed on the support frame 40. The frame bottom 200 may be located in the receiving space 21.

Furthermore, a receiving space 51 in which a lighting module 50 is received may be formed in an outer edge and along the circumferential direction of the frame bottom 200.

A receiving space in which an elastic member 500 is received may be formed on an upper surface of the frame bottom 200 and at a position adjacent to a central area where the shaft pan 400 is fixedly disposed.

Furthermore, the frame pans 300 may be disposed to respectively support the plurality of camera modules 100 thereon so as to be tiltable. Each of the frame pans 300 may be able to perform a panning motion while being disposed on the frame bottom 200.

In this regard, the camera module 100 may perform tilt/pan/rotation (spin) motions and thus perform corresponding tilting, panning and rotation functions.

In the tilting motion, each camera module 100 may pivot upwardly or downwardly around a tilt axis TA of each frame pan 300. In the panning motion, the camera module 100 may revolve clockwise or counterclockwise around a panning axis PA corresponding to and coinciding with a center line of the frame bottom 200 under a rotation of the frame pan 300 around the axis PA. For example, the tilting angle may be in a range of 0 to 90°, and the panning angle may be in a range of 0 to 360°. In the rotation motion, each camera module 100 may rotate or spin around a center line of each camera module, which will be described later in a separate manner. For example, the rotation angle may be in a range of 0 to 90°.

Further, the shaft pan 400 may be coupled to a center of the frame bottom 200 and may be disposed around the panning axis PA. At this time, the shaft pan 400 may press an inner side of each frame pan 300 toward the frame bottom 200 to fix the each frame pan 300 thereto. The frame pans 300 may revolve around the panning axis PA while being disposed on the frame bottom 200.

In this embodiment, four camera modules 100 and four corresponding frame pans 300 and four lighting modules 50 are provided, respectively, by way of example.

Therefore, one camera module 100 may pan or resolve around the panning axis PA to get closer or further away from another camera module adjacent thereto in a clockwise manner or another camera module adjacent thereto in an anti-clockwise manner.

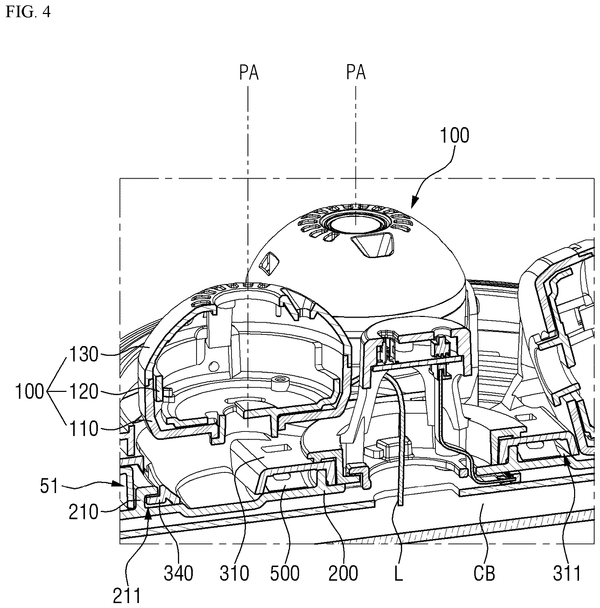

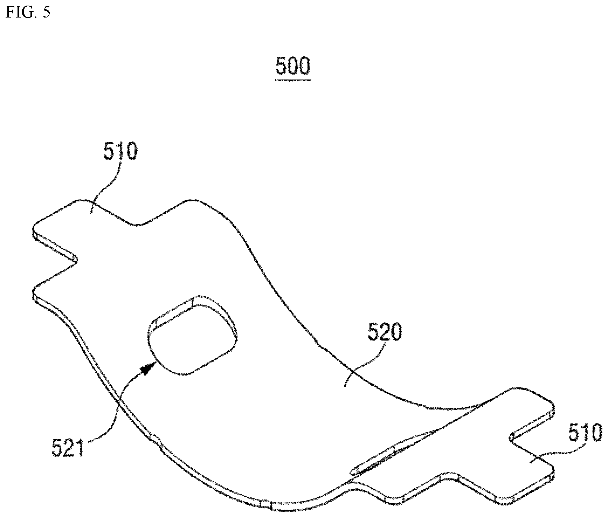

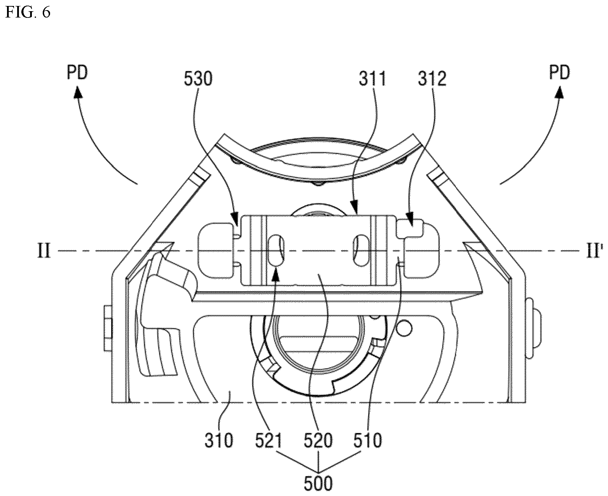

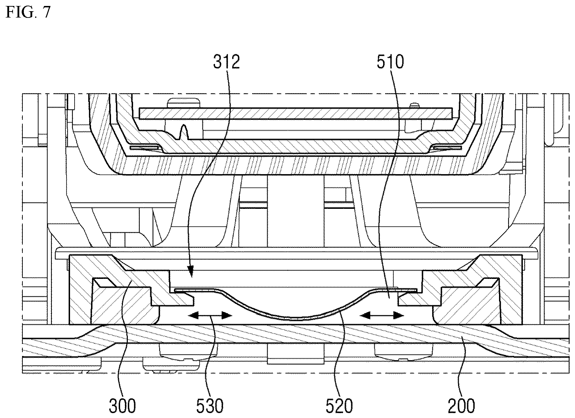

FIG. 4 is an enlarged reference diagram illustrating a portion of the multi-camera assembly as illustrated in FIG. 3. FIG. 5 is an enlarged partial view showing an elastic member of the multi-camera assembly as illustrated in FIG. 4. FIG. 6 is a rear view showing components around the elastic member of the multi-camera assembly as illustrated in FIG. 4. FIG. 7 is a cross-sectional view showing an II-II' cross-section of the multi-camera assembly as illustrated in FIG. 6.

Referring to FIGS. 4 to 7, the camera module 100 may include a frame tilt 110, a cover rotate 120, and a cover front 130.

Each frame tilt 110 may be pivotally coupled to each frame pan 300 at the tilt axis TA.

The cover rotate 120 may be coupled to an inner side surface of the frame tilt 110. The cover rotate 120 may be coupled to the frame tilt in a screw rotation manner while being inserted into an inner space defined by the frame tilt 110. The cover rotate 120 may partially pass through the inner space of the frame tilt 110 in a lower center area thereof, and may be combined with the frame tilt in the screw rotation manner so as not to be removed from the frame tilt 110.

The cover front 130 may be disposed on top of the frame tilt 110. In this regard, the cover front 130 and the cover rotate 120 may rotate (spin) simultaneously while the cover front 130 us coupled to the cover rotate 120.

Among the tilting/panning/rotation (spin) as described above, the rotation or the spinning of the camera module 100 may occur when the cover front 130 and the cover rotate 120 rotate or spin simultaneously around a rotation axis RA. For example, the rotation or spinning of the cover front 130 in a state where the installation of the multi-camera assembly 10 is completed may provide a function to control reversal of an image or adjust a levelness according to a shooting direction.

Furthermore, the frame bottom 200 may have a stopper 210 formed adjacent to the receiving space 51 of the lighting module 50. The stopper 210 may have a coupling groove 211 formed to face the panning axis PA. That is, the stopper 210 may has closed top and bottom, and may be opened inwardly through the coupling groove 211. A portion of the frame pan 300 may be inserted into the coupling groove 211.

In this regard, the frame pan 300 may include a protrusion inserted into the coupling groove 211. That is, the protrusion may protrude in a direction away from the panning axis PA and may be formed as a curved surface corresponding to the panning rotation direction PD. Therefore, the frame pan 300 may be supported on the frame bottom 200 so that an outer side thereof is not removed from the coupling groove 211 in the panning rotation direction PD due the protrusion.

Furthermore, the frame pan 300 may include a fixed portion 310. The fixed portion 310 may be disposed inside the frame pan 300. An elastic member receiving groove 311 concave upwardly so as to face the frame bottom 200 may be defined in the fixed portion. That is, the elastic member receiving groove 311 may be formed in a lower area of the frame pan 300 while the frame pan 300 is bent so as to protrude in the upward direction. The elastic member 500 may be individually installed inside each elastic member receiving groove 311.

This fixed portion 310 may have fixing grooves 312 formed on both opposing sides along the installation direction of the elastic member 500. That is, the fixing grooves 312 are respectively disposed on both opposing sides along the panning rotation direction PD of the frame pan 300, and both opposing ends of the elastic member 500 may be inserted into the on both opposing fixing grooves 312, respectively.

In addition, the elastic member 500 may include an inserted portion 510 and a leaf spring 520.

Each inserted portion 510 may be disposed at each of both opposing ends of the leaf spring 520 and may be inserted into each fixing groove 312.

The leaf spring 520 may be formed in a cross section that is approximately in a "U" shape such that the leaf spring protrudes convexly in the downward direction as illustrated in FIG. 5.

The elastic member 500 may be installed between the frame pan 300 and the frame bottom 200 so as to be compressed under a predetermined pressure. When the frame pan 300 rotates around the panning axis PA, the panning motion may be performed around the panning axis PA while the elastic member 500 applies the pressure such that the frame pan 300 and the frame bottom 200 become closer to each other.

At this time, the elastic member 500 may have a predetermined slip between the both opposing fixing grooves 312 during the panning process. A smoother rotation may be performed via the elastic restoring force of the elastic member 500 and the slip generated by the rotation, thereby providing a fixing force at a set position. To this end, a fixed spacing 530 in which the elastic member 500 may move may be formed between one fixing groove 312 adjacent to each other in the elastic member receiving groove 311. Furthermore, the elastic member 500 may have a perforated area 521 formed in an area adjacent to the inserted portion 510 at each of both opposing ends of the leaf spring 520. The perforated area 521 may provide a more gentle elastic restoring force of the elastic member 500 and may contribute to discharge heat due to friction thereof with the frame bottom 200 during the panning process.

Although not shown in the drawing, the elastic member 500 may be formed so that a portion in a longitudinal direction of the elastic member 500 is bent into a curve or surface along the panning rotation direction PD.

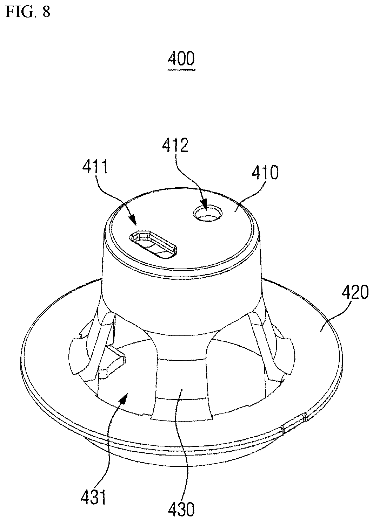

FIG. 8 is a perspective view showing the shaft pan 400 of the multi-camera assembly 10 as illustrated in FIG. 4.

Referring to FIG. 8, the shaft pan 400 may press the fixed portion 310 of the frame pan 300 toward the frame bottom 200. The shaft pan 400 may include an interface 410 disposed at a top thereof, a pressing portion 420 disposed at a lower end, and an extension 430 connecting the interface 410 and the pressing portion 420 to each other.

The interface 410 may include at least one or more of an USB terminal 411, a reset button 412, and a memory card slot (not shown) on an upper surface thereof.

Furthermore, the pressing portion 420 may press an upper surface or an inner side surface of the fixed portion 310 in a close contact manner with each other to fix an inner side of the frame pan 300. The pressing portion 420 may be fixed by a fastener passing through a bottom of the frame bottom 200.

In addition, the extensions 430 may connect the interface 410 and the pressing portion 420 to each other, and may include at least one communication holes 431 extending therethrough. The communication hole 431 defined in the inside of the shaft pan 400 may communicate with an outside out of the camera module 100 such that at least one (L in FIG. 4) of a power line or a control signal line of the camera module 100 and the lighting module is connected to a circuit board (see FIG. 4, CB). In this embodiment, four communication holes 431 are provided by way of example. However, the number of communication holes 431 is not limited thereto.

Therefore, a structure for connecting the power line and the control signal line to the circuit board CB may be improved to prevent the line from being exposed from the outside and to neatly organize the line connection structure. Furthermore, since the interface 410 is located at the top of the shaft pan 400, the interface 410 may be accommodated in an inner space of the dome cover 30. Thus, compared to a structure in which the interface 410 is disposed separately on a side surface of the housing 20, an overall height of the assembly may be reduced, thereby implementing a more compact product.

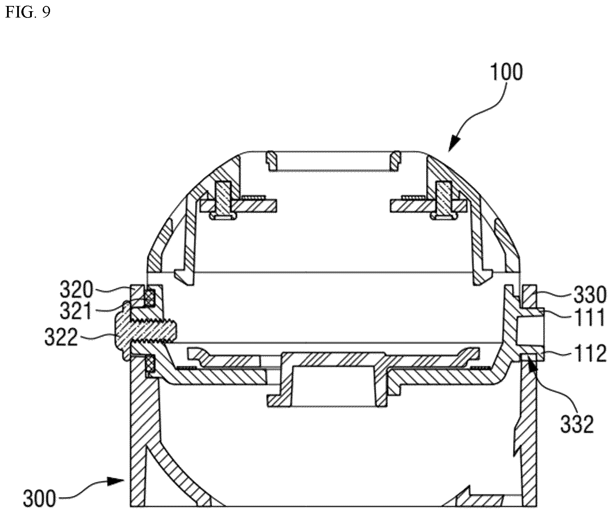

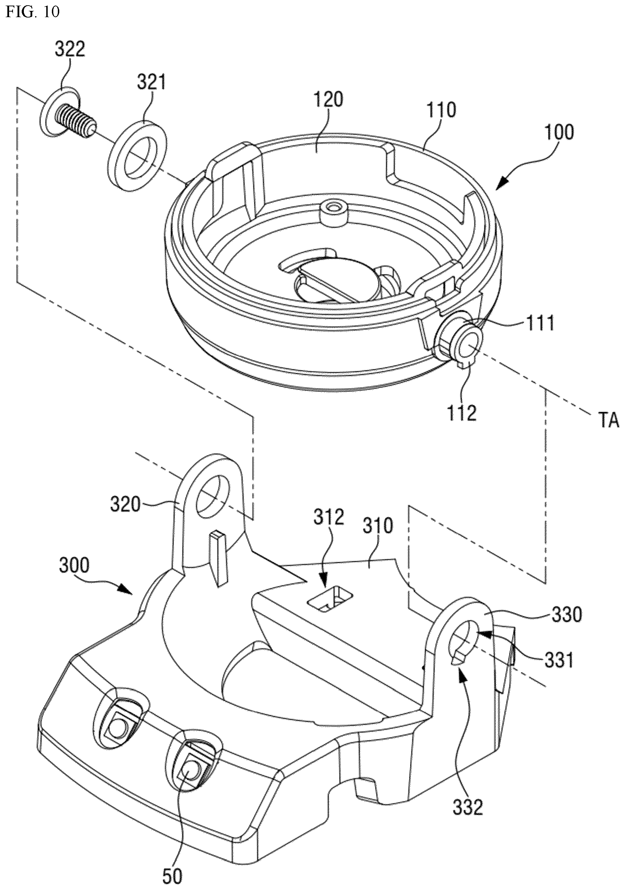

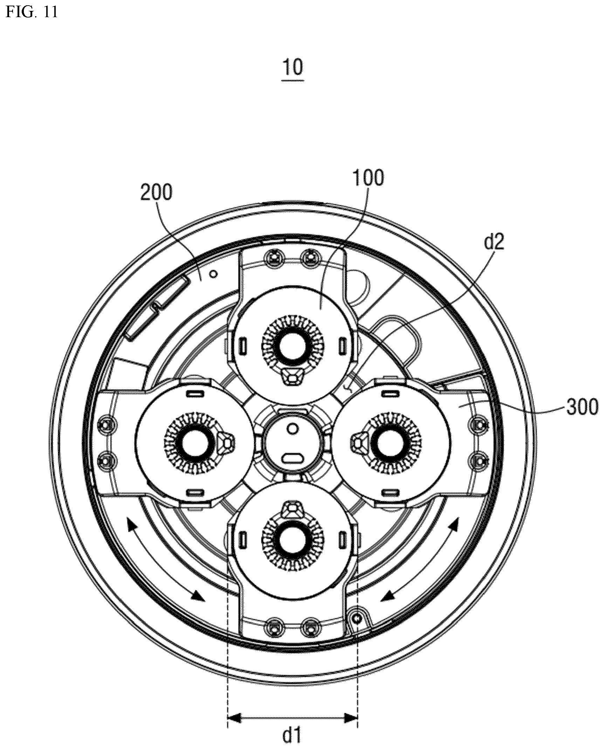

FIG. 9 is a cross-sectional view showing one camera module of the multi-camera assembly as illustrated in FIG. 4. FIG. 10 is a perspective view showing a combined structure of a frame pan and a frame tilt of the multi-camera assembly as illustrated in FIG. 9. FIG. 11 is a plan view showing an upper portion of the multi-camera assembly as illustrated in FIG. 1 while the dome cover has been removed therefrom.

Referring to FIGS. 9 and 11, the frame pan 300 may include a first support 320 supporting one side of the camera module 100 and a second support 330 supporting the other side of the camera module 100.

Furthermore, a friction member 321 is interposed between the first support 320 and one side of the frame tilt 110. The first support 320, the friction member 321, and the frame tilt 110 may be fastened to each other via a fastener 322. In this regard, the friction member 321 provides a predetermined frictional force between the first support 320 and the frame tilt 110, thereby providing a uniform contact feeling during a process in which the camera module 100 is tilted using the first support 320 as a pivot axis. That is, when the camera module 100 pivots around the tilt axis TA of the first support 320, a predetermined frictional force may be provided, so that the tilting angle may be accurately adjusted. Furthermore, the tilting angle may be fixed so as not to change from the fixed value.

The friction member 321 may be positioned at a position at which the first support 320 and the frame tilt 110 overlap each other in the vertical direction, such that an assembly spacing d1 may be reduced. This may increase a spacing d2 between the adjacent camera modules 100. When the spacing d2 between the camera modules 100 is increased, the spacing between the adjacent camera modules 100 in the panning rotation thereof around the panning axis PA within the multi-camera assembly 10 of the same size may be increased, so that an angle range in which the camera module 100 and the frame pan 300 may rotate or resolve may be increased. As the angle range in the panning rotation may be increased, a surveillance area that may be monitored through the camera module 100 may also be increased.

Furthermore, a through-hole 331 may be formed in the second support 330, and a stopper 111 inserted into the through-hole 331 may be disposed on the other side of the frame tilt 110 facing the through-hole 331.

The stopper 111 inserted into the through-hole 331, and a fastener 322 passing through the friction member 321 and the first support 320 may constitute a tilt shaft acting as the tilt axis TA.

The through-hole 331 may have a groove 332 recessed outwardly from an inner surface thereof. That is, the through-hole 331 may be formed as a hole having a constant radius in the tilt axis TA. The groove 332 may be an area extending outwardly beyond a radius of the through-hole in the tilt axis TA.

Furthermore, the stopper 111 may have a protrusion 112 protruding outwardly from an outer surface thereof and having a shape corresponding to a shape of the groove 332.

Therefore, when the stopper 111 is inserted into the through-hole 331, the camera module 100 and the frame pan 300 may be coupled to each other only when the groove 332 and the protrusion 112 may be engaged with each other. In this engaged state, only when the groove 332 and the protrusion 112 may be aligned with each other, the camera module 100 and the frame pan 300 may be removed from each other. For example, when the camera module 100 is completely coupled to the frame pan 300 along the tilt axis TA, the groove 332 and the protrusion 112 may not be aligned with each other as the camera module is within the tilt rotation angle range. That is, the groove 332 and the protrusion 112 may only partially overlap with each other, preferably, may be completely misaligned with each other in the angle range in which the camera module 100 is tilted.

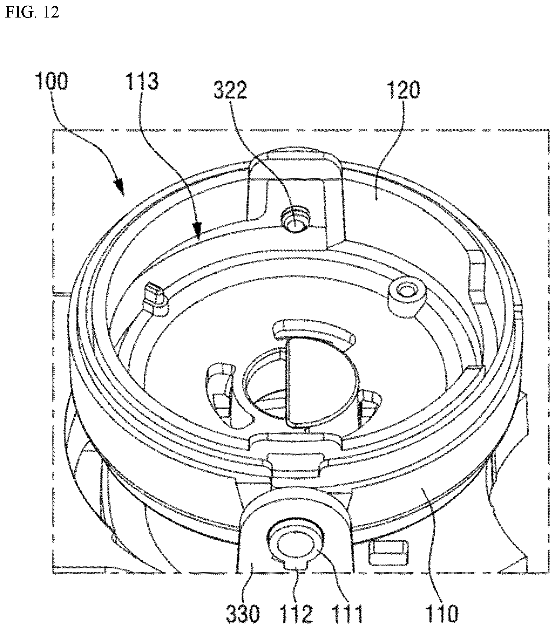

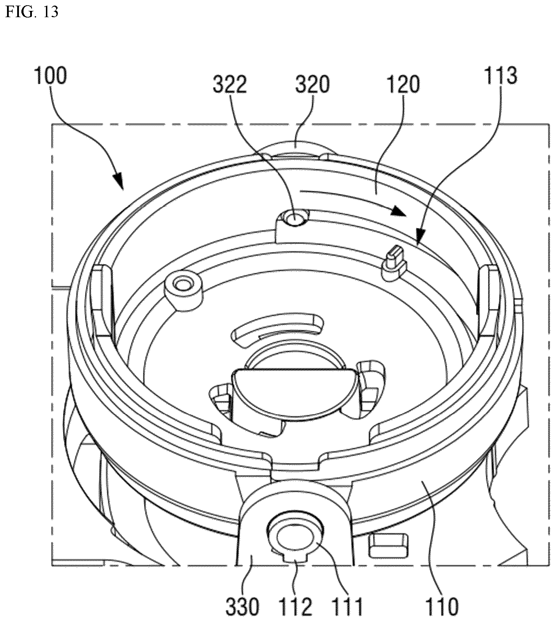

FIG. 12 and FIG. 13 are perspective views illustrating the internal assembly structure of the camera module 100 as illustrated in FIG. 4.

Referring to FIG. 9 and FIG. 12 and FIG. 13, the cover rotate 120 may be rotatably accommodated in the inner space defined by an inner surface of the frame tilt 110. In this regard, the fastener 322 passing through and coupled to the first support 320 is partially exposed to the inner space of the frame tilt 110. A fastener receiving groove 113 may be formed in an inner surface of the cover rotate along the rotation direction of the cover rotate 120 so that the rotation of the cover rotate 120 does not interfere with the fastener 322. The fastener receiving groove 113 may extend in a correspond manner to the rotation angle range of the cover rotate 120, so that interference thereof with the fastener 322 may be avoided in the rotation angle range.

One of FIG. 12 and FIG. 13 may have a rotation angle of 0° of the cover rotate 120, and the other thereof may have a rotation angle of 90° of the cover rotate 120.

The fastener receiving groove 113 formed in the inner surface of the cover rotate 120 may provide an effect of reducing the overall weight of the camera module 100 and increasing the assembly workability.

Therefore, according to the multi-camera assembly according to an embodiment of the present disclosure, a smooth panning revolving feeling may be implemented by individually providing the elastic member corresponding to each camera module so as to be received between the frame pan and the frame bottom. Further, a uniform rotation (or spinning) feeling of the camera module may be provided by improving the joint structure between the frame tilt and the cover rotate. Further, a more compact appearance may be achieved by defining the fastener receiving groove in the cover rotate to reduce the overall size of the camera module. Further, the panning angle of the camera module may be further increased while the size of the camera module may be reduced, such that a wider angle of view for surveillance may be secure. The interface is installed at the top of the shaft pan such that a side height of the housing may be reduced.

Although embodiments of the present disclosure have been described with reference to the accompanying drawings, the present disclosure is not limited to the above embodiments, but may be implemented in various different forms. A person skilled in the art may appreciate that the present disclosure may be practiced in other concrete forms without changing the technical spirit or essential characteristics of the present disclosure. Therefore, it should be appreciated that the embodiments as described above is not restrictive but illustrative in all respects.

## Claims

1. A multi-camera assembly (10) comprising:
a plurality of camera modules (100);
a plurality of frame pans (300) for respectively supporting the camera modules (100) such that each camera moule is tiltable relative to each frame pan (300);
a frame bottom (200) constructed to support the frame pans (300) thereon such that the frame pans (300) are able to revolve around a center axis of the frame bottom (200) in a panning direction of the camera modules (100);
a shaft pan (400) disposed on the frame bottom (200) and constructed to fix inner sides of the frame pans (300); and
an elastic member (500) interposed between each of the frame pans (300) and the frame bottom (200).

2. The multi-camera assembly (10) of claim 1, wherein the frame bottom (200) has a stopper (111, 210) formed adjacent to a lighting module (50) disposed outwardly of the frame bottom (200),
wherein the stopper (111, 210) has coupling groove (211) facing inwardly,
wherein each frame pan (300) has a protrusion (112) inserted into the coupling groove (211).

3. The multi-camera assembly (10) of claim 2, wherein each frame pan (300) includes an fixed portion (310) positioned inwardly of the protrusion (112),
wherein the fixed portion (310) has an elastic member receiving groove (311) defined therein and facing the frame bottom (200),
wherein the elastic member (500) is received in the elastic member receiving groove (311).

4. The multi-camera assembly (10) of claim 3, wherein the fixed portion (310) has both opposing fixing grooves (312) respectively defined at both opposing sides arranged along a length direction of the elastic member (500),
wherein the fixing grooves (312) are spaced from each other by a spacing sized such that the elastic member (500) can be deformed elastically when being compressed.

5. The multi-camera assembly (10) of claim 4, wherein the elastic member (500) includes both opposing inserted portions (510) respectively inserted into the fixing grooves (312),
wherein the elastic member (500) includes a leaf spring (520) extending between both opposing inserted portions (510) in a bent manner therefrom so as to contact the frame bottom (200).

6. The multi-camera assembly (10) of claim 3, wherein each elastic member (500) is individually received in the elastic member receiving groove (311) of the fixed portion (310).

7. The multi-camera assembly (10) of claim 3, wherein the shaft pan (400) is configured to press an inner side surface of each of the fixed portions (310) outwardly.

8. The multi-camera assembly (10) of claim 3, wherein the shaft pan (400) includes:
an interface (410) constituting a top of the shaft pan (400) and disposed between the camera modules (100);
extensions (430) extending downwardly from the interface (410) and arranged in a circumferential manner; and
a pressing portion (420) connecting lower ends of the extensions (430) to each other, wherein the pressing portion (420) presses an upper surface or the inner side surface of the fixed portion (310).

9. The multi-camera assembly (10) of claim 8, wherein the shaft pan (400) includes at least one communication hole (431) defined between the extensions (430) extending between the interface (410) and the pressing portion (420).

10. The multi-camera assembly (10) of claim 1, wherein each frame pan (300) includes:
a first support (320) and a second support (330) configured to respectively support both opposing sides of each camera module (100) so that the camera module (100) pivots in a tilting manner around a tilt axis (TA) extending through the first support (320) and the second support (330);
a friction member (321) interposed between the first support (320) and one side of the camera module (100) in a close contact manner with each other; and
a through-hole (331) formed in an upper area of the second support (330) such that the other side of the camera module (100) is inserted into the through-hole (331).

11. The multi-camera assembly (10) of claim 10, wherein each camera module (100) includes:
a frame tilt (110) coupled to each camera module (100) at the first and second supports (330) such that the frame tilt (110) is able to tilt around the tilt axis (TA) extending through the first and second supports (330);
a cover rotate (120) rotatably inserted into an inner space defined in the frame tilt (110); and
a cover front (130) coupled onto the cover rotate (120) and constructed to rotate together with rotation of the cover rotate (120).

12. The multi-camera assembly (10) of claim 11, wherein the cover rotate (120) has a fastener receiving groove (113) defined in an inner surface of the cover rotate (120),
wherein the fastener receiving groove (113) extends along the rotational direction of the cover rotate (120),
wherein a portion of a fastener (322) having passed through the first support (320) is inserted into the fastener receiving groove (113).

13. The multi-camera assembly (10) of claim 11, wherein the frame tilt (110) includes a stopper (111, 210) inserted into the through-hole (331) of the second support (330), wherein the stopper (111, 210) protrudes outwardly in an aligned manner with the tilt axis (TA) of the camera module (100),
wherein the stopper (111, 210) has a protrusion (112) protruding from an outer surface thereof,
wherein the through-hole (331) of the second support (330) has a recess outwardly from an inner surface of the through-hole (331),
wherein the recess of the through-hole (331) and the protrusion (112) of the stopper (111, 210) are aligned or non-aligned with each other in the tilt axis (TA).

14. The multi-camera assembly (10) of claim 13, wherein when the camera module (100) is tilted relative to the frame pan (300) in a tilting angular range, the recess of the through-hole (331) and the protrusion (112) of the stopper (111, 210) partially overlap each other in the tilt axis (TA).
